# EUROPEAN PATENT SPECIFICATION

(11) **EP 3 988 456 B1**
(45) Date of publication and mention of the grant of the patent: **02.11.2022**
(21) Application number: 20203843.6
(22) Date of filing: 26.10.2020
(51) Int. Cl.: B64G 7/00

(54) **MOVABLE SPACE TEST FACILITY**
BEWEGBARE ANLAGE ZUM TESTEN UNTER WELTALLBEDINGUNGEN
INSTALLATION MOBILE POUR TESTER EN CONDITIONS SPATIALES

(43) Date of publication of application: 27.04.2022
(73) Proprietor: CRYOGENIC AND VACUUM SYSTEMS, SIA, 3601 Ventspils (LV)
(72) Inventor: Kravchenko, Sergey, 3601 Ventspils (LV); Kuleshov, Nikolay, 1005 Riga (LV); Panova, Natalia, 3601 Ventspils (LV)
(74) Representative: Fortuna, Jevgenijs

(56) References cited:
- CN-A- 111 470 073
- JP-A- 2009 097 673
- US-A- 3 064 364
- US-A- 3 084 454
- US-A- 3 396 584
- US-A1- 2008 052 051

## Description

### Technical field

The invention relates to machine building, and more particularly to test equipment intended for bench testing of elements, systems, and devices for spacecraft as well as other devices intended for use in space.

### Prior art

Static testing of elements, systems, and devices for spacecraft as well as other devices intended for use in space is necessary for testing the operation of these devices before they are launched into space. Space test facilities make it possible to simulate space conditions, including ambient pressure, temperatures, solar radiation, and so on.

A test facility for studying the characteristics of electric rocket engines is known (KP121868P1). The test facility contains a vacuum chamber with pump compartments, a compartment for installing an electric rocket engine, a vacuum pump system comprising cryogenic vacuum pumps, a cooled shield that converts the energy of an ionized gas stream and is disposed in the end part of the vacuum chamber, and also contains an additional shield in the form of a diaphragm with a central aperture, the size of which is smaller than the size of the cooled shield/energy converter, wherein the additional shield is disposed between the compartment for installing the electric rocket engine and the cooled shield/energy converter, and the cryogenic pumps are connected with the pump compartments disposed between the compartment for installing the electric rocket engine, the additional shield, and the shield/converter. The known test facility is stationary and cannot be quickly moved from one place to another as needed so that elements, systems, and devices intended for use in space can be tested at the place of their manufacture.

There is known a vacuum testing device (CN 111470073) comprising separate vacuum tank and test vacuum tank, connected through a corrugated pipe, so that a dry pump, a molecular pump and a cryogenic pump are prevented from being directly connected to the test vacuum tank, and the vibration influence on the test vacuum tank in the operation process is avoided; through the support of an air cylinder of a first air floating platform, the test vacuum tank is enabled to be in an air floating state, and the vibration influence of the outside on the test vacuum tank is isolated; through the support of an air cylinder of a second air floating platform, an object carrying platform is enabled to be in an air floating state, so that a test product placed on the object carrying platform is in an air floating state, and the vibration influence of the outside on the test product is isolated.

The transport of complex equipment consisting of numerous elements is associated with a potential risk of damage and degraded functional capability. These undesirable phenomena may arise as a result of the action of various types of forces and moments that affect equipment parts when they are being transported and stored. Such forces and moments may include vertical, longitudinal, and lateral forces and their associated moments that arise because of a change in the position of the facility relative to the horizon; inertial forces and their associated moments that arise when a vehicle carrying the facility accelerates or brakes or traverses bumps in the road; centrifugal forces and their associated moments that arise when the vehicle trajectory changes direction during various types of turns; and vibrational loads that result from small irregularities in the road surface. These forces and their associated moments can cause significant internal stresses in the structural elements of the facility that can result in damage to and even destruction of various types of connections, and can result in significant permanent deformations in and destruction of parts of the facility when the loads acting on those parts exceed the yield strength and even break strength of the parts, and can also cause failures associated with low-cycle fatigue or exceeding the creep rupture strength of the material used to manufacture the components of these parts of the facility.

### Disclosure of invention

The purpose of the invention is to eliminate the drawbacks of the prior art and create a mobile space test facility that can be moved quickly without alterations to the geometry of its elements as a result of plastic deformation and/or mechanical damage and damage to connections, including to their leak integrity, to a necessary location for testing elements, systems, and devices intended for use in space.

The stated purpose is achieved by the proposed movable space test facility according to claim 1.

The facility may additionally be supplied with a cryogenic system containing a system for transporting coolant and containing cryoshrouds installed in the vacuum chamber of the facility, and moreover the cryoshrouds are supplied with channels through which coolant can pass and which are designed for absorbing heat from the action of incident electromagnetic radiation in the infrared, visible, and ultraviolet ranges, and moreover the channels of the cryoshrouds are connected with channels for coolant supply and return, where the upper pipe or pipes that remove coolant from the system rest in a pipe shoe disposed in the gap between individual elements of the cryoshroud; the pipe shoe is attached to the housing of the vacuum chamber and is capable of securing the pipe or pipes in a given spatial position while permitting the pipes to slide relative to the pipe shoe when they undergo thermal expansion or contraction; the lower pipe or pipes that supply coolant to the cryogenic system rest in a pipe shoe disposed in the gap between individual elements of the cryoshroud; the pipe shoe is attached to the housing of the vacuum chamber and is capable of securing the pipes in a given spatial position while permitting the pipes to slide relative to the pipe shoe when they undergo thermal expansion or contraction. The cryoshroud additionally may be secured, using the pipe shoe, to the vacuum chamber housing.

The facility also may be supplied with a solar simulator installed with the capability of regulating its spatial position and additionally equipped with brackets for mounting the simulator in transport position so that straps and other elastic and rigid load mounting hardware can be used.

The space test facility may be supplied with, or may have integrated into the vacuum chamber, sources of plasma and/or ionizing radiation in the form of an electron emitter, an alpha source, and/or a hydrogen plasma source capable of directing the radiation they create onto a test object disposed in the vacuum chamber, and moreover the abovementioned sources of plasma and/or ionizing radiation are installed on a vibration damping device in the form of spring vibration isolator devices and connections and/or vibration-absorbing plates. If these sources are in the form of a device that is separate from the vacuum chamber, then they additionally are supplied with brackets for mounting the plasma sources in transport position on their own supports, which in turn are installed on a vibration damping device in the form of spring vibration isolator devices and connections and/or vibration-absorbing plates.

According to a preferred embodiment of the invention, the cover of the vacuum chamber cover is made so that the hardware used to mount the cover in transport position is in the form of spacer collar assemblies for sturdy, rigid, detachable mounting of the cover on the housing of the vacuum chamber, and moreover the spacer collar assemblies contain a spacer collar designed to be installed between the cover and the housing of the vacuum chamber to control their spatial position.

### Brief description of drawings

Fig. 1 shows an example of the test facility;
Fig. 2 shows an embodiment of the proposed facility with cryoshrouds; Fig. 3 shows an embodiment of the proposed facility supplied with a solar simulator;
Fig. 4 shows an embodiment of the proposed facility supplied with sources of ionizing radiation and a plasma source;
Fig. 5 shows examples of the configuration for anchoring the facility using straps, where Fig. 5A is the configuration for anchoring by the metal rings/padeyes on the facility and Fig. 5B is the configuration for wrap-around anchoring.
Fig. 6 illustrates the use of spacer collar assemblies for sturdy and rigid mounting of the mobile cover to the chamber housing;
Fig. 7 illustrates examples of spacer collar assemblies used for sturdy and rigid mounting of the mobile cover to the chamber housing;
Fig. 8 illustrates examples of securing the wedge-shaped vacuum gate of the vacuum test facility in transport position, where Fig. 8A depicts attachment to the vacuum chamber, Fig. 8B depicts attachment to the vacuum chamber and the exterior frame, and Fig. 8C depicts attachment to the exterior frame;
Fig. 9 illustrates examples of the frame configuration for the facility mounting platform with the frame installed on spring vibration isolator devices, where Fig. 9A is the first example configuration of the frame installed on spring vibration isolator devices, Fig. 9B is the second example configuration of the frame installed on spring vibration isolator devices and vibration-absorbing plates, and Fig. 9C is the third example configuration of the frame installed on spring vibration isolator devices;
Fig. 10 illustrates an example of the placement on a vehicle of the frame with pneumatic vibration isolator devices under the vacuum test facility mounting platform;
Fig. 11 illustrates an example of a vibration damper used to prevent vibration loads from affecting the turbomolecular pump;
Fig. 12 illustrates an example of a cryoshroud with mounting brackets;
Fig. 13 illustrates an example of additionally securing the cryoshroud by means of a shipping block between the vacuum chamber housing and the cryoshroud.

### Detailed description of the invention

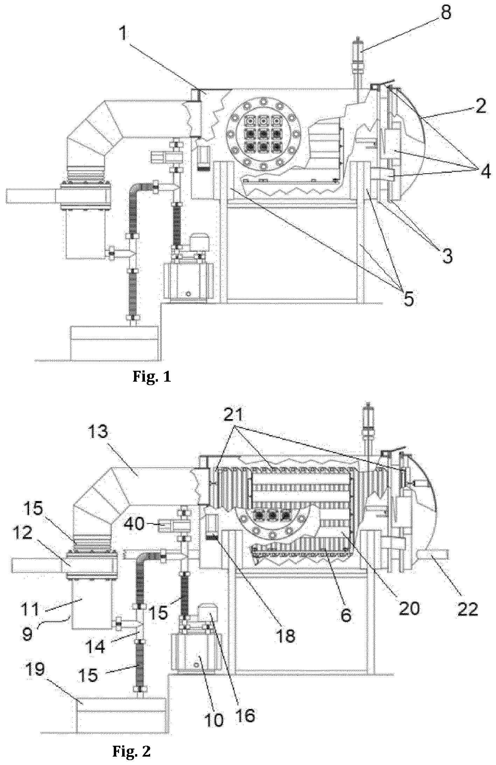

The test facility shown as an example in Fig. 1 contains: a vacuum chamber 1; one or more covers 2; vacuum seals 3; a mechanism for securing the cover 4; a saddle support with legs 5 securable on a platform; fittings 6 for installing (static mount or positioning) the test object; pressure-tight electrical and pneumatic connectors and communication lines 7 capable of a working connection with the test object to ensure its functioning; pressure sensors 8; and a vacuum evacuation system 9.

The vacuum evacuation system 9 comprises: one or more fore-vacuum pumps 10; one or more high-vacuum pumps 11, for example, turbomolecular and/or cryogenic; vacuum gates 12 and 40 and a vacuum break valve (optional); vacuum lines 13; vacuum seals, flanges, and fittings 14; bellows and/or other elastic connections 15 that do not transmit vibration loads; optionally, a vacuum pump exhaust scrubber 16; optionally, a cooling system for the evacuation equipment 17; a system for inflow of outside air and/or dry clean gas 18 that comprises an inlet valve with manual, pneumatic, or electrical control; a filter; optionally, a dryer and a splitter that eliminates the effect of the air stream on the test object; optionally, a residual gas analyzer 19 (mass spectrometer), and a helium or other leak detector.

The vacuum chamber 1 may be cylindrical, spherical, conical, or a rectangular prism in shape. The covers 2 may be opening, removable, retractable, lifting, or sliding.

The vacuum seals 3 may be in a pair - the flange on the cover and the counter flange on the vacuum chamber, which contain a sealing material that is attached, for example, to one of the flanges of the pair, while the counter flange is sanded or polished so that the microrelief resulting from the machining is directed as parallel as possible to the contour of the sealing material. The mechanism for securing the cover 4 may be installed on the chamber flange (housing) and may be integrated with or separate from the mechanism for opening and/or detaching the cover.

When the facility is operating, the required apparatus (communication system and steering command simulators ensuring test object functioning and providing control over its operation in accordance with the testing program, for example, for an antenna actuator these are command transmitters, simulators of mechanical and electrical loads, and a simulator of the onboard control system and the power system) must be connected to the indicated lines 7.

According to a preferred embodiment of the invention, the device contains at least two pressure sensors 8 - fore-vacuum and high-vacuum (which may be configured as a single instrument) installed in close proximity to the test object, or in the uppermost or "hottest" point of the chamber.

In large facilities, three or more high-vacuum sensors 8 may be used; this makes it possible to monitor not only the evacuation process, but also gas emission from the test object, and in combination with a mass spectrometer to understand the reasons for the gas emission and to monitor the correctness of the assembly and fabrication of the spacecraft components.

The fore-vacuum and high-vacuum vacuum evacuation system 9 is based on the technical solutions of a "sterile" vacuum, which precludes the entry of oil or any other substances into the vacuum chamber during the testing process (special types of pumps, traps, reverse-flow sensors, and vacuum gates to shut off vacuum pneumatic lines).

The facility may be equipped with a system for simulating heat flows to simulate the heat flows of Earth (as well as the Sun and planet surfaces), said system containing one or more thermal radiation sources 20, temperature sensors disposed on the test object (and possibly on intra-chamber equipment), information processing systems that make it possible to create a map of the thermal field on the test object and/or of the field affecting the test object, and a control system that makes it possible to create a thermal field with specific characteristics by controlling the outputs of the thermal radiation sources (Fig. 2).

According to one embodiment of the invention, the facility is also supplied with a gas and liquid system containing one or more pneumatic consoles and hydraulic stations (optional) constructed to supply the test object with gases and liquids at a specified pressure and with specified propellant consumption, for example, used for loading xenon into the test object, or for feeding helium or a helium-air mixture into the cavity of the test object when checking its leak integrity.

The facility may also be supplied with a power supply system that performs electrical distribution and protection functions with respect to the equipment of the facility; a compressed air supply system 23 for feeding the pneumatic lines of the cover, vacuum gates and other valves (optional); a control system and/or a control console (optional) that controls the equipment and informs the operator of facility status.

In addition, the system may be equipped with a window 25 for observing the test object (optional); an external or intra-chamber television and/or thermal imaging system for observing the test object in the visible or extended or multispectral ranges, including a multi-chamber system with observation of especially important elements of the test object (optional).

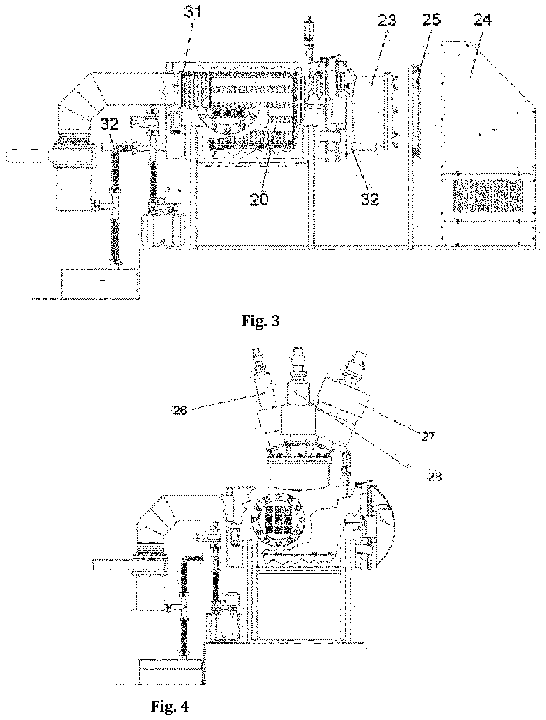

According to another embodiment of the invention, the proposed facility is additionally supplied with a cryogenic system with cryoshrouds 31 for simulating the dissipative capability of space, i.e., the ability to dissipate energy (Fig. 3). The cryoshrouds 31 are designed to be capable of being filled with a coolant (usually a cryogenic liquid) and are designed for absorbing incident electromagnetic radiation in the infrared, visible, and ultraviolet ranges (the boundaries of the absorption spectrum may be extended). The cryoshrouds 31 are a sequence of metal bands of complex shape (completely covering the surface being protected and allowing the remaining gaseous medium to flow around them through the crevices) that are supplied with channels for coolant to pass through for removing heat and maintaining a specific temperature within the facility chamber being protected. The bands of metal and the tubing (channels) connected to these bands are connected with channels for coolant supply and return that have a large diameter and thick walls and are the stronger and sturdier elements of the cryogenic system. They can be used for securing the cryogenic system in space.

The transport of complex equipment consisting of numerous elements is associated with a potential risk of damage and degraded functional capability. In connection with this, the structure of the proposed mobile space test facility is supplied with elements preventing possible displacement of the facility relative to a vehicle, displacement of elements of the facility relative to each other, damage to or violation of the leak integrity of connections, or excess permanent deformations and destruction of facility parts. The above-noted system contains rigid, spring, damper, and spring vibration isolator devices that not only serve to link and interlock specific elements of the facility, but also provide a synergistic effect

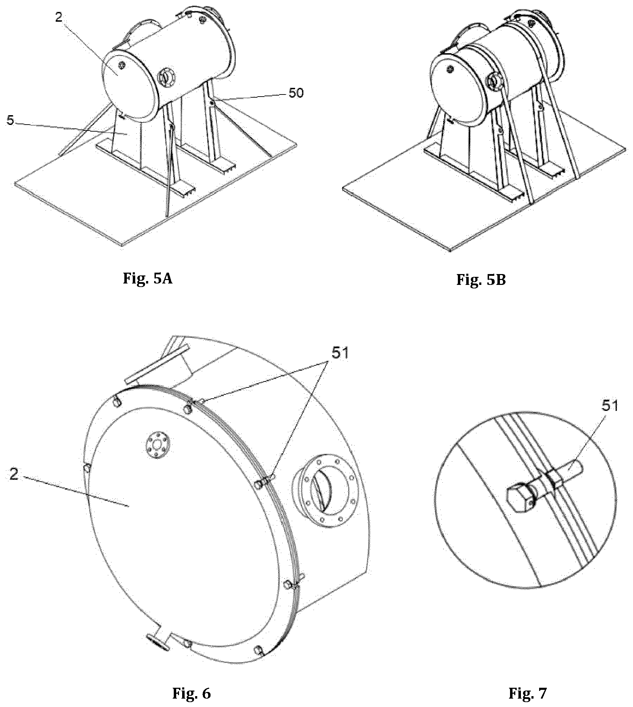

Fig. 5 shows examples of the configuration for anchoring the facility using straps, where Fig. 5A is the configuration for anchoring by the metal rings/padeyes 50 on the legs 5 of the facility and Fig. 5B is the configuration for wrap-around anchoring. The metal rings or padeyes 50 are designed for straps and other rigid and elastic load mounting hardware to be secured to them. Figs. 6 and 7 illustrate an example of the use of spacer collar assemblies for sturdy and rigid mounting of the cover 2 of the vacuum chamber to the chamber housing 1, and at the same time a gap is maintained between the cover 2 and the housing 1 that prevents the transmission, via the vacuum seal, of loads that arise when the facility is transported, thereby preventing compression of the vacuum seal and preventing damage to the seal. The spacer collar assemblies may take various forms depending on the structural features of the facility structure. The bolt head and washer on the one side and the nut and washer on the other side act on the adjoining parts by pulling them towards each other, but the facility parts do not touch each other since there is a spacer collar of specified thickness between them that ensures a specified distance between the parts. A sturdy and rigid connection results in which all of the loads are borne either by the bolt connection or by forces of friction between the parts and the spacer collar, the magnitude of the friction depending on the number of spacer collar assemblies and their tightening torque.

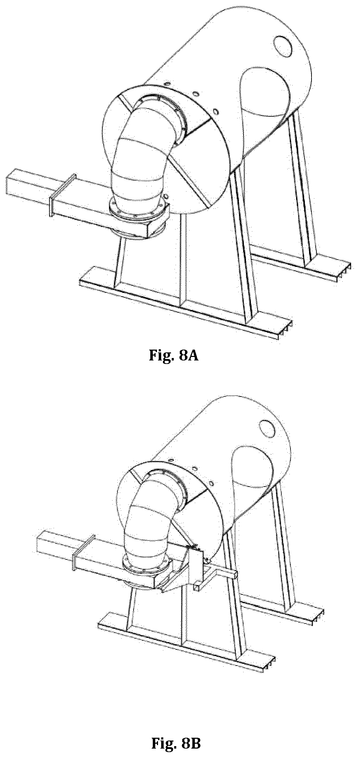

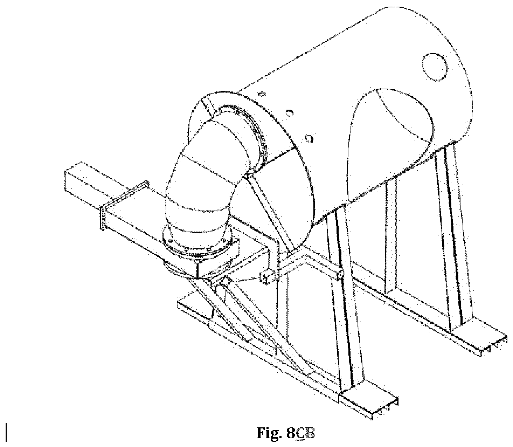

Fig. 8 illustrates examples of using a bracket, an additional fastener, to secure a massive element of the facility - the wedge-shaped vacuum gate - in transport position, where Fig. 8A depicts attachment to the vacuum chamber 1, Fig. 8B depicts attachment to the vacuum chamber 1 and the saddle support with legs 5 securable on the platform, and Fig. 8C depicts attachment to the saddle support with legs 5.

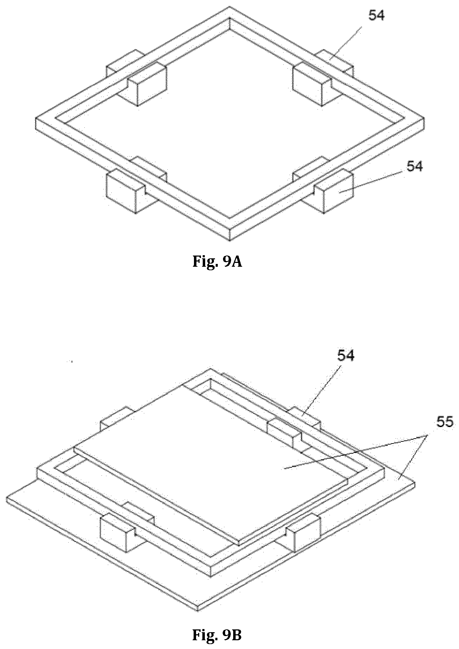

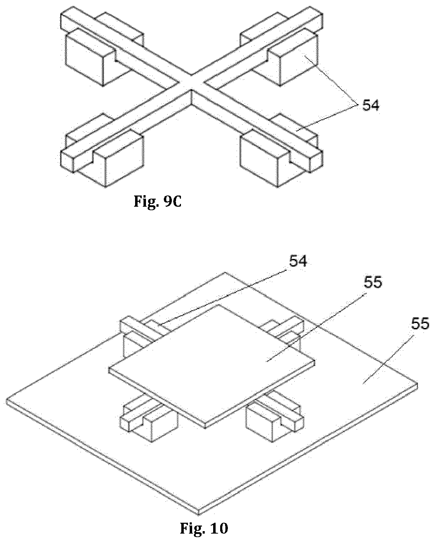

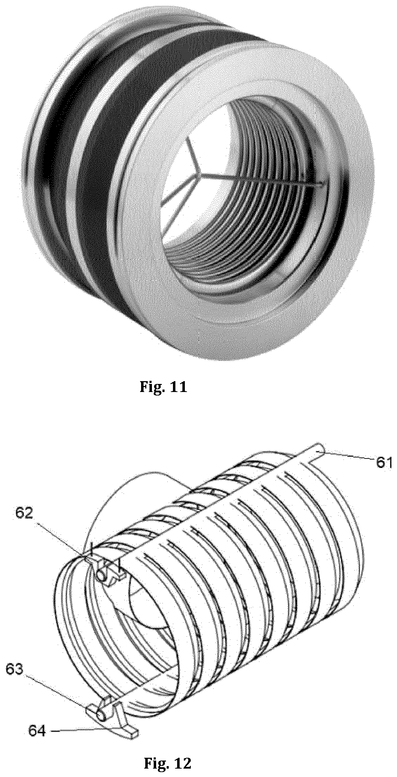

Fig. 9 illustrates examples of the frame configuration for a mounting platform for the proposed facility with the frame installed on pneumatic vibration isolator devices, where Fig. 9A is the first example configuration of the frame installed on spring vibration isolator devices 54 (pneumatic vibration isolator devices), Fig. 9B is the second example configuration of the frame installed on spring vibration isolator devices 54 and vibration-absorbing plates 55, and Fig. 9C is the third example configuration of the frame installed on spring vibration isolator devices 54. Fig. 10 illustrates the disposition of the frame on a vehicle with spring vibration isolator devices 54 and vibration-absorbing plates 55. An example of a vibration damper used to prevent vibration loads from affecting the turbomolecular pump is shown in Fig. 11.

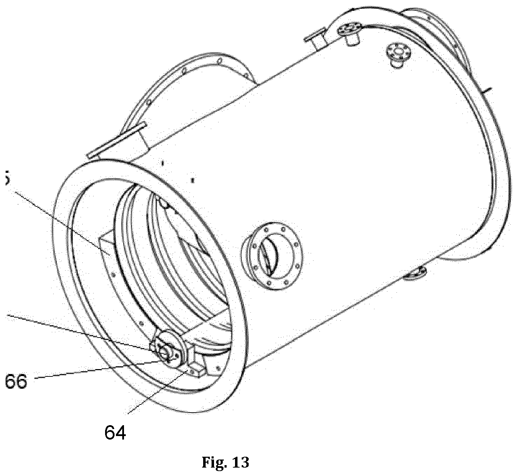

The upper pipe or pipes 61 (Fig. 12) that remove coolant from the system on the side of the mobile cover 2 when the facility is in operating condition rest in a pipe shoe 62 disposed in the gap between individual elements of the cryoshroud 31. The pipe shoe 62 is attached to the housing of the vacuum chamber 1, for example by means of cable stays that secure the pipe or pipes 61 in a given spatial position while permitting the pipes 61 to slide relative to the pipe shoe 62 when they undergo thermal expansion/contraction. The lower pipe or pipes 63 that supply coolant to the cryogenic system on the side of the mobile cover 2 when the facility is in operating condition rest in a pipe shoe 64 disposed in the gap between individual elements of the cryoshroud 31. The pipe shoe 64 is attached to the housing of the vacuum chamber 1, for example by means of bolt/screw connections that secure the pipes 63 in a given spatial position while permitting the pipes 63 to slide relative to the pipe shoe when they undergo thermal expansion/contraction. The pipe shoes (62, 64) are preferably made of materials that have low thermal conductivity and are sufficiently durable at low temperatures, for example, teflon and/or carbon fiber reinforced plastic, to avoid creating thermal bridges between the cryogenic system and the vacuum chamber housing 1. The cryoshroud 31 may be additionally supplied with flanges 66 that can be attached to the pipe shoes 62, 64 using spacer collar assemblies between the flanges 66 and the pipe shoes 62, 64 (Fig. 13). According to one more embodiment of the invention, the shipping block 65 (Fig. 13) may be used as the mounting point for the cryoshroud 31 in transport position. The shipping block 65 is preferably U-shaped and surrounds at least one-fourth of the diameter of the cryoshroud 31 in the area of its lower pipe or pipes 63, and is supplied with mounting fittings for attachment to the housing of the vacuum chamber 1 and/or the pipe shoe 62, 64.

The attachment of the upper 61 and lower 63 pipes of the mobile facility where they enter the vacuum chamber 1 is also reinforced, but so as to avoid creating thermal bridges, i.e., by avoiding contact between metal components of the vacuum chamber 1 and the cryogenic system, and a heat insulator made, for example, of teflon or carbon fiber reinforced plastic, is disposed between metal parts connecting the cryogenic system and the vacuum chamber 1.

To supply coolant to the cryoshrouds 31 and return it, pressure-tight pipes 32 are used which usually have heat insulation (for example, thermal blanket, high-vacuum, vacuum granular fill, polyurethane foam) A facility supplied with cryoshrouds 31 may additionally comprise: appropriate hardware for the pipes 32 (usually safety valves, control valves for throttling coolant flow through each shroud, etc.) that form a coolant transport system; a system or device for storing coolant reserves in open-cycle cryogenic systems, and in closed-cycle cryogenic systems, a system for cooling the coolant, for example, a cryogenic refrigeration unit connected to the transport system directly or via a pump providing forced circulation, or via a separator, or via a heat exchange loop with an intermediate coolant; or other similar systems that may be included in various combinations.

The facility also may contain a system for receiving coolant (for example, liquid nitrogen) from a vehicle (for example, tanker trucks or rail tank cars) (optional); a measurement and control system (optional) into which sensors may feed, for example, sensors of the amount of liquid in a tank, pressure sensors at the entry and exit of cryogenic shrouds, temperature sensors at one or more points on the cryogenic shrouds, communication lines, a valve control actuator, valve position sensors, master controllers, a display system, and a system for recording and storing information. The measurement and control systems for the temperature of the object and of the cryoshrouds 31 and the heat flow simulation system (the thermal radiation sources 20) can be combined into a single system or other combinations of systems that measure the thermal field (for example, the value of the temperature at one or several points on the test object and/or the cryoshrouds and/or the thermal radiation sources), and optionally calculating a map of the thermal field.

According to one more embodiment of the invention, the facility is additionally supplied with equipment that creates an area of lower temperatures (for example, based on liquid helium) on the surface of or on components of or near the test object. Such equipment maybe used to test the properties of precision elements (electromagnetic receivers and elements thereof, for example, optical and microwave mirrors, resonators, and reflectors). In this case, the space test facility may be supplied with local cryoshrouds using, for example, liquid helium as a coolant In this case, a system for storing and supplying liquid helium is added to the facility.

According to one more possible embodiment of the invention, the facility is supplied with a solar simulator. The solar simulator simulates the properties of extraterrestrial solar radiation that have been established by appropriate standards, for example standard ASTM E-490 (USA), which defines the standard spectrum for space applications in near-earth orbits. According to the invention, the solar simulator may have different designs and may be disposed both inside the space test facility and on the exterior of the facility. When a solar simulator is installed on the exterior of the facility, on the vacuum chamber housing one or more pressure-tight windows are installed that are transparent in the required spectral range and ensure that high-power radiation is transmitted without degradation. Furthermore, the radiation source itself may be disposed close to the window or at a distance therefrom. At the destination, to perform the operation of precise spatial positioning of the solar simulator relative to the vacuum chamber, the equipment is collimated. For this, the test facility is supplied with a laser optical axis device and a laser rangefinder, while the solar simulator is supplied with an appropriate optical device with calibrated lenses. The goal of the collimation is for the beam of the laser optical axis to fall on the cross-hairs of the lenses at the entry and exit of the optical device installed on the solar simulator. The lens calibration makes it possible to simplify the collimation process. The beam of the laser optical axis falling on the crosshairs of two lenses spaced apart corresponds to a precise spatial position with respect to vertical position, horizontal position, rotation, and tilt of the solar simulator, while the horizontal distance is determined using the laser rangefinder, and it is adjusted using horizontal adjustment mechanisms. These operations may be performed, for example, using ball screws, a turntable, and vertically disposed adjustable supports installed on the platform of the vacuum chamber (generally in the form of threaded connections with a locking mechanism). These operations may be automated using appropriate equipment (control modules, microprocessors, sensors, and digital actuators that control the position of the ball screw support and other mechanisms). The power elements of the housing of the solar simulator are additionally equipped with hardware for securing the simulator in its transport position using straps or other elastic and rigid load mounting hardware (that do not transmit vibrational loads, see Figs. 5A-5B), while the simulator itself is mounted on a vibration damping device configured in the form of spring vibration isolator devices and connections and/or in the form of one or more vibration-absorbing plates.

The facility may be supplied with devices for measuring luminous flux uniformity and density that are disposed both on the exterior of the vacuum chamber and inside of same.

The solar simulator may be supplied with an autonomous or general control system or a control system integrated into the general control system of the facility.

As the spring vibration isolator devices 54, according to the invention, it is proposed that dampers be used (hydraulic, hydropneumatic, air) with unidirectional and/or bidirectional action, gas springs with unidirectional and/or bidirectional action, pneumatic support systems, and passive elastic elements that possess damping properties such as rubber, plastic, or composite supports and braces, as well as elastic tensioners. As the vibration-absorbing plates 55, according to the invention, it is proposed that active and/or passive vibration isolation systems be used. These vibration-absorbing elements, in combination with one another and with the elements that attach them to the surfaces of the test facility, possess the ability to absorb vibrations in the vertical, longitudinal, and latitudinal directions, and to prevent the facility from swinging in the horizontal and vertical planes, as well as to prevent resonance of the facility and/or parts thereof when the frequencies of movement deviation from the rectilinear induced by a vehicle coincide with the natural oscillation frequencies of the facility and/or parts thereof.

To test the resistance of a test object to the effects of plasma and ionizing radiation, sources of plasma and different types of ionizing radiation, for example, short-wave ultraviolet, X-ray, and alpha (helium nucleus), may be integrated into the space test facility. Sources of ionizing radiation mounted on or in the space test facility may be point-source, distributed, and/or raster scanning. For this, in the vacuum chamber, additional flanges are disposed on which, for example, an electron emitter 26 for simulating passing through a belt of beta radiation when testing for resistance to being in Van Allen belts, an alpha source 27 for the same purposes, and a hydrogen plasma source 28 may be mounted (Fig. 4). If these radiation sources are in the form of a device that is separate from the vacuum chamber, then they additionally are supplied with brackets for mounting the radiation sources in transport position using straps and/or other elastic and rigid load mounting hardware.

When such testing is being performed, an energy spectrometer, radiometer, and/or other device(s) for measuring the characteristics of the ionizing radiation and the consequences of its effects on the test object may be mounted in the vacuum chamber.

The sources of plasma and/or ionizing radiation may be configured as a separate device or as an integral part of the test facility. In the event the plasma simulator is designed in the form of a separate unit, it is secured in its own spatial position, as is the solar simulator, taking into account their structural features. The source of plasma and/or ionizing radiation, in contrast to the solar simulator, is not sensitive to vibrations and is not equipped with an internal device protecting the source from vibrations and therefore it absolutely must be secured using a vibration damping device, because during transport, in contrast to when the facility is stationary, the vibrational loads are greater and the source requires additional protection, as does the vacuum chamber. But in contrast to the solar simulator, the source of plasma and/or ionizing radiation has a more oblong shape and is equipped with a cooling system, powerful magnets, and a high-voltage electrical system. Ensuring its spatial position requires the same bracing as for the vacuum chamber, in order to decrease loads from bending moments that arise from the action of bulk and dynamic forces at a great distance (force arm) from the supports, and the use of straps also requires that this circumstance be taken into account so that the total load from the action of the straps and the action of the bulk and dynamic loads of the radiation source itself do not increase the load beyond tolerance. To ensure the proper functioning of high-voltage wires that require appropriate insulation, duringtransport possible tension on the cables must be prevented in order to avoid damaging connections, including those with vacuum protection. To prevent this phenomenon, the high-voltage wires (sufficiently heavy-gauge and massive) must have in several places a loop or slack of appropriate shape (the minimum radius of a bend in the cables is generally stipulated by the manufacturer) that makes it possible for the relative position of cable attachment points to change as a result of possible deformations in the structural elements of the facility without the appearance of excess tensile forces that act on the cable itself as well as on connection sites. To prevent possible damage to the cable connectors resulting from the action of dynamic forces that arise during transport (the high-voltage wires are sufficiently massive and have a specified length), the facility must be equipped with brackets that additionally secure the high-voltage wires in place, but in contrast to the other brackets of the facility, these brackets must be an electrically safe version. For proper functioning of the magnetic system of the radiation simulator and/or the plasma source and/or the magnetron(s), a cooling system is often used. Therefore, the seals of the cooling system must be designed taking into consideration the additional static and dynamic loads on portions of the facility to prevent possible damage to the seals. In order to decrease the static and dynamic loads on portions of the facility and/or damage to the cooling system seals, the coolant is drained from the cooling system into a tank, thereby decreasing the mass of the radiation simulator cooling system. Particular attention is paid to possible leaks from damaged cooling system seals in places where high-voltage cables lie, since moisture getting on a high-voltage cable may result in a short circuit. Electrical and high-voltage cables in particular are generally laid above cooling system pipes, while releasing pressure from the cooling system and dumping coolant eliminate the potential threat of coolant spraying on the surrounding structural elements of the test facility and its systems, including the high-voltage system. When the test facility is being prepared for operation, coolant again fills the cooling system of the radiation simulator and/or plasma source and/or magnetrons and/or magnet system.

As an example of the operation of the test facility, one of the more complex tests is cited, namely thermal vacuum testing, taking into consideration variations for other types of testing. Below an example is cited of the sequence of operation of the test facility as a testing system using the example of a facility with a closed-cycle cryogenic system without a solar simulator and without sources of ionizing radiation and plasma.

The test object is installed on the fitting 6, Fig. 1 in the vacuum chamber 1. Functional pneumatic and electrical connections are hooked up to the test object; on control points of the test object, temperature control sensors are installed that are connected to communication lines 7 that connect the sensors to the measurement system. The facility may be turned on under the following conditions: all necessary types of voltage are present; neutral and grounding circuits are operational; the pneumatic supply system (a compressor with a storage tank) is switched on and the required pressure is being maintained in the pneumatic system; the equipment cooling system is switched on and is ensuring that the operating pressure and temperature of the coolant that cools vacuum pumps 10 and 11 stay within the specified intervals; the cryogenic system tank has been filled until the amount of liquid nitrogen is in the specified range. Next, power is supplied to the control and measurement system, and the bootup of the control system computers is checked; the establishment (presence) of a connection between the main computer and the following is checked: the control system for the evacuation equipment, for example, the high-vacuum turbomolecular pump 11 and the fore-vacuum pump 40; pressure measuring instrumentation, for example the vacuum gauge 8; the control system for the vacuum shutoff valves; position sensors and the control system for closing the vacuum chamber cover 2; the control system for the valves in the cryogenic system; the main controller for the cryogenic circulation pump (if applicable); cryogenic system pressure sensors; all temperature measurement channels and temperature sensors in the temperature measurement system; channels for controlling the output of thermal flow simulators; the solar simulator control system; the luminous flux density measurement system; and other sensors and subsystems integrated in accordance with user requirements when experiments are being conducted pursuant to a user tasking.

The vacuum chamber evacuation stage begins with checking the closure of the vacuum chamber cover 2 and the latching devices on the vacuum chamber cover 4. The condition of the valve for the inflow of air to the vacuum chamber 1 is checked. The valve must be completely closed, and the inflow filter must be hooked up. The condition of the fore-vacuum gate 40 and the high-vacuum gates 12 of the vacuum chamber (vacuum shutoff valves) and the fore-vacuum gate of the turbomolecular pump (if applicable) is checked. All of the vacuum chamber gates must initially be in the closed position. The fore-vacuum pump 10 is switched on, and the fore-vacuum gate 40 of the vacuum chamber 1 is opened. The pressure in the vacuum chamber is checked by the reading on the vacuum gauge 8. When the operating pressure of the fore-vacuum pump reaches the value specified in the testing program, the flow of coolant through the high-vacuum pump 11 (for example, turbomolecular) is switched on. After coolant circulation has been verified, the high-vacuum gate 12 is opened. When the pressure in the vacuum chamber reaches the level required to ensure safe operation in accordance with the testing program, the high-vacuum pump 11 is switched on.

Next, the heat flow simulator system is switched on. If the testing program specifies hot thermocycling or thermostatting without the use of the cryogenic system, then the heat flow simulator system is programmed for appropriate outputs and an appropriate number of cycles. The execution of the cycles is monitored using output and temperature sensors. If the testing program specifies cold thermocycling or thermostatting, or thermal balance tests, then the cryogenic system (using the example of a closed-cycle cryogenic system) is thawed, for which: the discharge valves of the cryoshrouds 31, Fig. 3, are fully opened, and the pressure inflow valve for the vapor jacket on the coolant (for example, nitrogen) tank is opened. When the coolant pressure in the tank reaches the specified value, the intake valve for filling the coolant circulation apparatus is opened. If the coolant level in the circulation apparatus has reached the normal mark, and the temperature of the circulating pump has reached the specified value, then the intake valves of the cryoshrouds 31 are throttled in accordance with the testing program (shrouds that are not needed are completely switched off, and shrouds that are needed are opened to the value indicated in the testing program).

When operation concludes (the testing program has been fulfilled), the cryogenic system is shut off; the cryoshrouds 31 are warmed to an above-zero temperature (if they were used) while monitoring using the temperature sensors and the heater output indicators; the heat flow simulator system is shut off; the vacuum evacuation system is shut off and air 10 flows in to the vacuum chamber; the cover of the vacuum chamber is opened to service the test object; and the test record is taken out of the control system.

The proposed structure of the mobile space test facility makes it possible to move it to another place without mechanical damage or damage to pressure-tight connections, and to temporarily install it at the destination in an appropriate facility and connect it to all available supply lines that are applicable based on the parameters for the facility.

## Claims

1. A movable space test facility comprising a vacuum chamber (1), a saddle support with legs (5), securable on a platform, for the vacuum chamber, a cover (2) for the vacuum chamber, fittings (6) inside the vacuum chamber for installing a test object, a vacuum evacuation system (9), one or more fore-vacuum pumps (10) and one or more high-vacuum pumps (11) operationally connected with the vacuum evacuation system (9) and capable of exhausting gases from the vacuum chamber (1), wherein the one or more fore-vacuum pumps (10) and the one or more high-vacuum pumps (11) are connected with the vacuum evacuation system (9) by means of bellows connections and/or a flexible tubing, including a reinforced tubing, that permit mutual angular and linear relative displacement of the one or more fore-vacuum pumps (10), the one or more high-vacuum pumps (11) and the vacuum evacuation system (9), and furthermore the saddle support with legs (5) is installed on one or more vibration-absorbing elements (54, 55) constructed with the ability to absorb vibrations in the vertical direction, thereby preventing the transmission of vibration loads from a vehicle to the parts of the movable space test facility disposed on the vibration-absorbing elements, **characterised in that** the one or more fore-vacuum pumps (10) and the one or more high-vacuum pumps (11) are supplied with brackets for mounting these pumps in a transport position to a housing of the vacuum chamber (1) and to the saddle support with legs (5).

2. The facility in claim 1, wherein the vibration-absorbing elements are in the form of spring vibration isolator devices (54) or one or more vibration-absorbing plates (55) constructed so as to be capable of absorbing vibration in the vertical, longitudinal, and latitudinal directions, and preventing the facility from swinging in the horizontal and vertical planes, and preventing resonance of the facility and/or parts thereof when the frequencies of movement deviation from the rectilinear induced by a vehicle coincide with the natural oscillation frequencies of the facility and/or parts thereof.

3. The facility in claim 1 or 2, wherein said facility is additionally supplied with a cryogenic system containing a system for transporting coolant and containing cryoshrouds (31) installed in the vacuum chamber (1) of the facility, and moreover the cryoshrouds (31) are supplied with channels through which coolant can pass and which are designed for absorbing heat from the action of incident electromagnetic radiation in the infrared, visible, and ultraviolet ranges, and moreover the channels of the cryoshrouds (31) are connected with channels for coolant supply and return, where
- the upper pipe or pipes (61) that remove coolant from the cryogenic system rest in a pipe shoe (62) disposed in the gap between individual elements of the cryoshroud (31); the pipe shoe (62) is attached to the housing of the vacuum chamber (1) and is capable of securing the pipe or pipes (61) in a given spatial position while permitting the pipes (61) to slide relative to the pipe shoe (62) when they undergo thermal expansion or contraction;
- the lower pipe or pipes (63) that supply coolant to the cryogenic system rest in a pipe shoe (64) disposed in the gap between individual elements of the cryoshroud (31); the pipe shoe (64) is attached to the housing of the vacuum chamber (1) and is capable of securing the pipes (63) in a given spatial position while permitting the pipes (63) to slide relative to the pipe shoe when they undergo thermal expansion or contraction.

4. The facility in claim 3, wherein the cryoshroud (31) is supplied with pipe shoes (62, 64) designed to secure it in the vacuum chamber (1), and moreover the pipe shoes (62, 64) are made of materials that have low thermal conductivity and are sufficiently durable at low temperatures, for example, teflon and/or carbon fiber reinforced plastic.

5. The facility in claim 4, wherein the cryoshroud (31) is additionally supplied with flanges (66) that can be attached to the pipe shoes (62, 64) using spacer collar assemblies between the flanges (66) and the pipe shoes (62, 64).

6. The facility in any of claims 3-5, wherein said facility additionally contains at least one U-shaped shipping block (65) that surrounds at least one-fourth of the diameter of the cryoshroud (31) in the area of its lower tube or tubes (63) and is supplied with mounting fittings for attachment to the housing of the vacuum chamber (1) and/or the pipe shoe (62, 64].

7. The facility according to any of the abovementioned claims, wherein said facility is additionally supplied with a solar simulator installed on the exterior of the facility with the capability of regulating its spatial position and equipped with adjustable devices for securing it to the saddle support with legs (5); said facility is equipped with additional fasteners for mounting the solar simulator on a vehicle; moreover, the solar simulator is installed on a vibration damping device that in turn is in the form of spring vibration isolator devices and connections and/or vibration-absorbing plates.

8. The facility according to any of the abovementioned claims, wherein the vacuum chamber (1) of the facility is additionally equipped with a source of plasma and/or ionizing radiation in the form of an electron emitter (26), an alpha source (27), and/or a hydrogen plasma source (28) capable of directing the radiation they create onto a test object disposed in the vacuum chamber (1), and moreover the abovementioned sources of plasma and/or ionizing radiation are equipped with additional fasteners for mounting them onto the saddle support with legs (5) securable on the platform or onto their own supports, which in turn are installed on a vibration damping device in the form of spring vibration isolator devices and connections and/or vibration- absorbing plates.

9. The facility according to any of the abovementioned claims, wherein the legs (5) supporting the vacuum chamber are supplied with metal rings or padeyes (50) designed so that straps or belts can be secured to them.

10. The facility according to any of the abovementioned claims, wherein the cover (2) of the vacuum chamber is supplied with spacer collar assemblies (51) for sturdy, rigid, detachable attachment of the cover (2) to the housing of the vacuum chamber (1), and moreover the spacer collar assemblies (51) contain a spacer collar designed to be installed between the cover (2) and the housing of the vacuum chamber (1).

## Patentansprüche

1. Eine bewegliche Raumversuchsanlage mit einer Vakuumkammer (1), einem auf einer Plattform feststellbaren Sattelstützbügel mit Beinen (5) für die Vakuumkammer, einem Deckel (2) für die Vakuumkammer, Muffen (6) im Inneren der Vakuumkammer zur Fixierung eines Versuchsobjekts, einem Vakuumabzugsssystem (9), einer oder mehreren Vorvakuumpumpen (10) und einer oder mehreren Hochvakuumpumpen (11), die funktionssicher mit dem Vakuumabzugsssystem (9) verbunden und in der Lage sind, Gase aus der Vakuumkammer (1) abzusaugen, wobei die eine oder mehreren Vorvakuumpumpen (10) und die eine oder mehreren Hochvakuumpumpen (11) mit dem Vakuumabzugsssystem (9) mittels Faltenbalg- und/oder biegsamer Schlauchverbindungen, einschließlich verstärkter Schläuche, verbunden sind, und eine gegenseitige winkelartige und geradlinige Relativverschiebung der einen oder mehreren Vorvakuumpumpen (10) und der einen oder mehreren Hochvakuumpumpen (11) mit dem Vakuumabzugsssystem (9) ermöglichen. Außerdem ist der Sattelstützbügel mit Beinen (5) auf einem oder mehreren schwingungsabsorbierenden Elementen (54, 55) installiert, die dafür ausgelegt sind, Schwingungen in vertikaler Richtung zu absorbieren, wodurch die Übertragung von Schwingungsbelastungen von einem Fahrzeug auf die auf den schwingungsabsorbierenden Elementen angeordneten Teile der beweglichen Raumversuchsanlage verhindert wird, die **dadurch gekennzeichnet ist, dass** die eine oder mehrere Vorvakuumpumpen (10) und die eine oder mehrere Hochvakuumpumpen (11) mit Halterungen zur Befestigung dieser Pumpen in einer Transportstellung an einem Gehäuse der Vakuumkammer (1) und an dem Sattelstützbügel mit Beinen (5) versehen sind.

2. Versuchsanlage nach Patentanspruch 1, wobei die schwingungsabsorbierenden Elemente in Form von Federschwingungsisolatoren (54) oder einer oder mehreren Schwingungsabsorptionsplatten (55) vorliegen, die dafür ausgelegt sind, Schwingungen in vertikaler, längs- und querlaufender Richtung zu absorbieren und zu verhindern, dass die Versuchsanlage in der horizontalen und vertikalen Ebene schwingt, und dass eine Resonanz der Versuchsanlage und/oder von Teilen davon verhindert wird, wenn die Frequenzen der durch ein Fahrzeug verursachten Abweichung von geradliniger Bewegung mit den Frequenzen der Eigenschwingungen der Versuchsanlage und/oder von Teilen davon zusammenfallen.

3. Versuchsanlage nach Anspruch 1 oder 2, **dadurch gekennzeichnet, dass** sie zusätzlich mit einem kryogenen System ausgestattet ist. Dieses enthält ein System zum Transport von Kühlmittel und eine in der Vakuumkammer (1) der Versuchsanlage installierte Kühlummantelung (31). Ferner ist die Kühlummantelung (31) mit Kanälen versehen, durch die Kühlmittel fließen kann und die zur Absorption von Wärme aus der Einwirkung einfallender elektromagnetischer Strahlung im infraroten, sichtbaren und ultravioletten Bereich ausgelegt sind. Die Rohrleitungen der Kühlummantelung (31) sind des Weiteren mit Rohrleitungen für die Kühlmittelzufuhr und -rückführung verbunden, wobei:
- die obere Rohrleitung oder Rohrleitungen (61), die Kühlmittel aus dem kryogenen System abführen, in einem Rohrschuh (62) ruhen, der in dem Spalt zwischen den einzelnen Elementen der Kühlummantelung (31) eingelassen ist. Der Rohrschuh (62) ist an dem Gehäuse der Vakuumkammer (1) befestigt und in der Lage, die Rohrleitung oder Rohrleitungen (61) in einer bestimmten räumlichen Position zu sichern, während er es den Rohrleitungen (61) erlaubt, relativ zu dem Rohrschuh (62) zu gleiten, wenn sie sich thermisch dehnen oder zusammenziehen;
- die untere Rohrleitung oder Rohrleitungen (63), die das kryogene System mit Kühlmittel versorgen, in einem Rohrschuh (64) ruhen, der in dem Spalt zwischen den einzelnen Elementen der Kühlummantelung (31) eingelassen ist. Der Rohrschuh (64) ist an dem Gehäuse der Vakuumkammer (1) befestigt und in der Lage, die Rohrleitungen (63) in einer bestimmten räumlichen Position zu sichern, während er den Rohrleitungen (63) erlaubt, relativ zu dem Rohrschuh zu gleiten, wenn sie wenn sie sich thermisch dehnen oder zusammenziehen.

4. Versuchsanlage nach Anspruch 3, **dadurch kennzeichnet, dass** die Kühlummantelung (31) mit Rohrschuhen (62, 64) versehen ist, die dazu dienen, sie in der Vakuumkammer (1) zu sichern, und dass die Rohrschuhe (62, 64) aus Materialien mit einer geringen Wärmeleitfähigkeit bestehen, die bei niedrigen Temperaturen ausreichend haltbar sind, z. B. aus Teflon und/oder kohlenstofffaserverstärktem Kunststoff.

5. Versuchsanlage nach Anspruch 4, wobei die Kühlummantelung (31) zusätzlich mit Flanschen (66) versehen ist, die an den Rohrschuhen (62, 64) unter Verwendung von Abstandsmanschetten zwischen den Flanschen (66) und den Rohrschuhen (62, 64) befestigt werden können.

6. Versuchsanlage nach einem der Ansprüche 3 bis 5, **dadurch gekennzeichnet, dass** sie zusätzlich mindestens einen U-förmigen Transportblock (65) enthält, der mindestens ein Viertel des Durchmessers des Kühlschlauchs (31) im Bereich seines unteren Rohres bzw. seiner unteren Rohre (63) umschließt und mit Befestigungsbeschlägen zur Anbringung am Gehäuse der Vakuumkammer (1) und/oder dem Rohrschuh (62, 64) versehen ist.

7. Versuchsanlage nach einem der vorstehend genannten Ansprüche, **dadurch gekennzeichnet, dass** zusätzlich an der Außenseite der Versuchsanlage ein Solarsimulator angebracht ist, der in seiner räumlichen Position verstellbar ist und mit verstellbaren Vorrichtungen zur Befestigung am Sattelstützbügel mit Beinen (5) ausgestattet ist. Die vorstehend genannte Versuchsanlage ist mit zusätzlichen Halterungen zur Montage des Solarsimulators an einem Fahrzeug versehen ist. Der Solarsimulator ist auf einem Schwingungsisolator angebracht, der wiederum in Form von Federschwingungsisolatoren und Verbindungen und/oder schwingungsabsorbierenden Platten ausgeführt ist.

8. Versuchsanlage nach einem der vorstehend genannten Ansprüche, **dadurch gekennzeichnet, dass** die Vakuumkammer (1) der Versuchsanlage zusätzlich mit einer Quelle von Plasmastrahlung und/oder ionisierender Strahlung in Form eines Elektronenstrahlers (26), einer Quelle der Alphastrahlung (27) und/oder einer Quelle von Wasserstoffplasma (28) ausgestattet ist, die in der Lage sind, die von ihnen erzeugte Strahlung auf einen in die Vakuumkammer (1) gelegten Versuchsgegenstand zu richten. Darüber hinaus sind die oben genannten Quellen von Plasma und/oder ionisierender Strahlung mit zusätzlichen Befestigungselementen ausgestattet sind, um sie auf dem Sattelstützbügel mit auf der Plattform befestigbaren Beinen (5) oder auf ihren eigenen Bügeln zu montieren, die ihrerseits auf einer Schwingungsdämpfer in Form von Federschwingungsisolatoren und -verbindungen und/oder schwingungsabsorbierenden Platten installiert sind.

9. Versuchsanlage nach einem der vorstehend genannten Ansprüche, **dadurch gekennzeichnet, dass** die Beine (5), die die Vakuumkammer tragen, mit Metallringen oder Ösen (50) versehen sind, die eine solche Form aufweisen, dass an ihnen Gurte oder Riemen befestigt werden können.

10. Versuchsanlage nach einem der vorstehend genannten Ansprüche, **dadurch gekennzeichnet, dass** der Deckel (2) der Vakuumkammer mit Distanzhülsen (51) zur stabilen, starren, lösbaren Befestigung des Deckels (2) am Gehäuse der Vakuumkammer (1) versehen ist, und dass die Distanzhülsen (51) darüber hinaus eine Distanzhülse enthalten, die zum Einbau zwischen dem Deckel (2) und dem Gehäuse der Vakuumkammer (1) vorgesehen ist.

## Revendications

1. Installation mobile d'essai spatial comprenant une chambre à vide (1), un support en forme de selle avec pieds (5), pouvant être fixé sur une plate-forme, pour la chambre à vide, un couvercle (2) pour la chambre à vide, des aménagements (6) à l'intérieur de la chambre à vide pour l'installation d'un objet d'essai, un système d'évacuation par vide (9), une ou plusieurs pompes à pré-vide (10) et une ou plusieurs pompes à vide poussé (11) fonctionnellement connectées au système d'évacuation par vide (9) et capable d'évacuer des gaz de la chambre à vide (1), dans laquelle la ou les pompes à pré-vide (10) et la ou les pompes à vide poussé (11) sont connectées au système d'évacuation par vide (9) au moyen de connexions à soufflet et/ou d'un tubage flexible, incluant un tubage renforcé, qui permettent un déplacement relatif angulaire et linéaire réciproque de la ou des pompes à pré-vide (10), de la ou des pompes à vide poussé (11) et du système d'évacuation par vide (9), et de plus le support en forme de selle avec pieds (5) est installé sur un ou plusieurs éléments absorbant les vibrations (54, 55) construits avec la capacité d'absorber des vibrations dans la direction verticale, ce qui empêche la transmission de charges de vibration depuis un véhicule vers les parties de l'installation mobile d'essai spatial disposées sur les éléments absorbant les vibrations, **caractérisée en ce qu'**une ou plusieurs pompes à pré-vide (10) et la ou les pompes à vide poussé (11) sont munies de crochets pour le montage de ces pompes dans une position de transport sur un logement de la chambre à vide (1) et sur le support en forme de selle avec pieds (5).

2. Installation selon la revendication 1, dans laquelle les éléments absorbant les vibrations sont sous la forme de dispositifs d'isolement de vibrations à ressort (54) ou d'une ou plusieurs plaques d'absorption de vibrations (55) construites de façon à être capables d'absorber des vibrations dans les directions verticales, longitudinales et latitudinales, et d'empêcher l'installation de balancer dans les plans horizontaux et verticaux, et d'empêcher une résonance de l'installation et/ou de parties de celle-ci lorsque les fréquences de déviation de mouvement par rapport à un mouvement rectiligne induites par un véhicule coïncident avec les fréquences d'oscillation naturelles de l'installation et/ou de parties de celle-ci.

3. Installation selon la revendication 1 ou 2, dans laquelle ladite installation est en outre munie d'un système cryogénique contenant un système pour transporter des caloporteurs et contenant des cryo-protections (31) installées dans la chambre à vide (1) de l'installation, et de plus les cryo-protections (31) sont munies de canaux par l'intermédiaire desquels un caloporteur peut passer et qui sont conçus pour absorber la chaleur provenant de l'action d'un rayonnement électromagnétique incident dans les gammes infrarouge, visible, et ultraviolette, et de plus les canaux des cryo-protections (31) sont connectés à des canaux pour l'alimentation et le retour de caloporteur, où
- le tuyau ou les tuyaux supérieur(s) (61) qui retirent du caloporteur du système cryogénique reposent dans un sabot de tuyau (62) disposé dans l'espace entre des éléments individuels de la cryo-protection (31) ; le sabot de tuyau (62) est attaché au logement de la chambre à vide (1) et est capable de fixer le tuyau ou les tuyaux (61) dans une position spatiale donnée tout en permettant aux tuyaux (61) de coulisser par rapport au sabot de tuyau (62) lorsqu'ils subissent une dilatation ou un retrait thermique ;
- le tuyau ou les tuyaux inférieur(s) (63) qui alimentent en caloporteur le système cryogénique reposent dans un sabot de tuyau (64) disposé dans l'espace entre des éléments individuels de la cryo-protection (31) ; le sabot de tuyau (64) est attaché au logement de la chambre à vide (1) et est capable de fixer les tuyaux (63) dans une position spatiale donnée tout en permettant aux tuyaux (63) de coulisser par rapport au sabot de tuyau lorsqu'ils subissent une dilatation ou un retrait thermique ;

4. Installation selon la revendication 3, dans laquelle la cryo-protection (31) est munie de sabots de tuyau (62, 64) destinés à la fixer dans la chambre à vide (1), et de plus les sabots de tuyau (62, 64) sont constitués de matériaux qui ont une faible conductivité thermique et sont suffisamment durables à basses températures, par exemple, du Téflon et/ou du plastique renforcé de fibres de carbone.

5. Installation selon la revendication 4, dans laquelle la cryo-protection (31) est en outre munie de brides (66) qui peuvent être attachées aux sabots de tuyau (62, 64) en utilisant des ensembles colliers d'espacement entre les brides (66) et les sabots de tuyau (62, 64).

6. Installation selon l'une quelconque des revendications 3 à 5, dans laquelle ladite installation contient en outre au moins un bloc de transport en forme de U (65) qui entoure au moins un quart du diamètre de la cryo-protection (31) dans la zone de son tube ou de ses tubes inférieurs (63) et est munie de raccords de montage pour fixation au logement de la chambre à vide (1) et/ou au sabot de tuyau (62, 64).

7. Installation selon l'une quelconque des revendications susmentionnées, dans laquelle ladite installation est en outre munie d'un simulateur solaire installé sur l'extérieur de l'installation avec la capacité de réguler sa position spatiale et équipé de dispositifs ajustables pour le fixer au support en forme de selle avec pieds (5) ; ladite installation est équipée d'éléments de fixation supplémentaires pour montage du simulateur solaire sur un véhicule ; de plus, le simulateur solaire est installé sur un dispositif d'amortissement de vibrations qui à son tour est sous la forme de dispositifs et connexions d'isolement de vibrations à ressort et/ou de plaques d'absorption de vibrations.

8. Installation selon l'une quelconque des revendications susmentionnées, dans laquelle la chambre à vide (1) de l'installation est en outre équipée d'une source de plasma et/ou de rayonnement ionisant sous la forme d'un émetteur d'électrons (26), d'une source alpha (27), et/ou d'une source de plasma d'hydrogène (28) capables de diriger le rayonnement qu'elles créent sur un objet d'essai disposé dans la chambre à vide (1), et de plus les sources de plasma et/ou de rayonnement ionisant susmentionnées sont équipées d'éléments de fixation supplémentaire pour leur montage sur le support en forme de selle avec pieds (5) pouvant être fixés sur la plate-forme ou sur leurs propres supports, qui à leur tour sont installés sur un dispositif d'amortissement de vibrations sous la forme de dispositifs et connexions d'isolement de vibrations à ressort et/ou de plaques d'absorption de vibrations.

9. Installation selon l'une quelconque des revendications susmentionnées, dans laquelle les pieds (5) supportant la chambre à vide sont munis d'anneaux métalliques ou platines à œil (50) conçus de sorte que des sangles ou des courroies peuvent y être fixées.

10. Installation selon l'une quelconque des revendications susmentionnées, dans laquelle le couvercle (2) de la chambre à vide est muni d'ensembles colliers d'espacement (51) pour une fixation solide, rigide, détachable du couvercle (2) au logement de la chambre à vide (1), et de plus les ensembles colliers d'espacement (51) contiennent un collier d'espacement conçu pour être installé entre le couvercle (2) et le logement de la chambre à vide (1).
